# EUROPÄISCHE PATENTSCHRIFT

(11) **EP 3 150 974 B1**
(45) Veröffentlichungstag und Bekanntmachung des Hinweises auf die Patenterteilung: **13.06.2018**
(21) Anmeldenummer: 16187658.6
(22) Anmeldetag: 07.09.2016
(51) Int. Cl.: G01F 1/58, G01F 1/60

(54) **VERFAHREN ZUM EINSTELLEN EINER KONSTANTEN MAGNETFELDSTÄRKE EINES MAGNETFELDS BEI EINEM MAGNETISCH-INDUKTIVEN DURCHFLUSSMESSGERÄT UND DIESBEZÜGLICHES MAGNETISCH-INDUKTIVES DURCHFLUSSMESSGERÄT**
METHOD FOR ADJUSTING A CONSTANT MAGNETIC FIELD STRENGTH OF A MAGNETIC FIELD IN A MAGNETIC INDUCTIVE FLOW METER AND RELATED MAGNETIC-INDUCTIVE FLOW METER
PROCEDE DE REGLAGE DE L'INTENSITE CONSTANTE D'UN CHAMP MAGNETIQUE SUR UN DEBITMETRE INDUCTIF MAGNETIQUE ET DEBITMETRE INDUCTIF MAGNETIQUE CORRESPONDANT

(30) Priorität: 02.10.2015 DE 102015116771
(43) Veröffentlichungstag der Anmeldung: 05.04.2017
(73) Patentinhaber: Krohne Messtechnik GmbH, 47058 Duisburg (DE)
(72) Erfinder: Dabrowski, Markus, 47269 Duisburg (DE); Florin, Wilhelm, 47198 Duisburg (DE)
(74) Vertreter: Gesthuysen Patent- und Rechtsanwälte

(56) Entgegenhaltungen:
- EP-A1- 0 969 268
- US-A- 4 236 410
- US-A- 4 784 000
- US-A1- 2003 005 778
- US-B1- 6 453 754

## Beschreibung

Die Erfindung betrifft zum einen ein Verfahren zum Einstellen einer konstanten Magnetfeldstärke eines Magnetfelds innerhalb eines Kommutierungsintervalls bei einem magnetisch-induktiven Durchflussmessgerät mit einem Messrohr und einem Elektromagneten zur Erzeugung des Magnetfelds. Dabei weist der Elektromagnet einen Stromregler und eine Spulenanordnung auf, erzeugt der Stromregler einen Spulenstrom und bewirkt der erzeugte Spulenstrom in der Spulenanordnung das Magnetfeld. Der Spulenstrom wird im zeitlichen Abstand des Kommutierungsintervalls kommutiert und der Elektromagnet erzeugt, wenn ein konstanter Sollstrom dem Stromregler vorgegeben wird, eingeschwungen die konstante Magnetfeldstärke.

Die Erfindung betrifft zum anderen ein magnetisch-induktives Durchflussmessgerät mit einem Messrohr, einem Elektromagneten zur Erzeugung eines Magnetfelds und einer Steuerungseinrichtung. Dabei weist der Elektromagnet einen Stromregler und eine Spulenanordnung auf, erzeugt der Stromregler einen Spulenstrom und bewirkt der erzeugte Spulenstrom in der Spulenanordnung das Magnetfeld. Der Elektromagnet kommutiert den Spulenstrom im zeitlichen Abstand eines Kommutierungsintervalls und der Elektromagnet erzeugt, wenn die Steuerungseinrichtung dem Stromregler einen konstanten Sollstrom vorgibt, eingeschwungen eine konstante Magnetfeldstärke des Magnetfelds.

Ein gattungsgemäßes magnetisch-induktives Durchflussmessgerät misst den Durchfluss eines Mediums durch das Messrohr. Dazu ist der Elektromagnet derart eingerichtet, dass das von ihm erzeugte Magnetfeld das im Messrohr befindliche Medium zumindest teilweise durchsetzt und eine Strömung des Mediums im Messrohr eine Induktionsspannung in dem Medium induziert. Die Induktionsspannung ist proportional zur Strömungsgeschwindigkeit des Mediums im Messrohr und aus der Strömungsgeschwindigkeit wird zum Beispiel unter Verwendung einer Innenquerschnittsfläche des Messrohrs der Volumendurchfluss des Mediums durch das Messrohr oder unter zusätzlicher Verwendung der Dichte des Mediums der Massedurchfluss des Mediums durch das Messrohr bestimmt. Der Durchfluss des Mediums durch das Messrohr bezieht sich demnach sowohl auf den Massedurchfluss als auch auf den Volumendurchfluss des Mediums durch das Messrohr.

Die Induktionsspannung wird mit mindestens einer Messelektrode abgegriffen, wobei die mindestens eine Messelektrode entweder in galvanischem Kontakt oder in kapazitivem Kontakt mit dem Medium im Messrohr ist. Wird die Induktionsspannung mit nur einer Messelektrode abgegriffen, so erfolgt die Messung in Bezug auf ein Bezugspotential, das zum Beispiel das Massepotential ist. Wird die Induktionsspannung mit mindestens zwei Messelektroden gemessen, sind für gewöhnlich die mindestens zwei Messelektroden im galvanischen oder kapazitiven Kontakt mit dem Medium im Messrohr.

Der Stromregler weist eine einzige gesteuerte Stromquelle, die den Spulenstrom erzeugt, und einen Regelkreis auf. Die Funktion des Regelkreises wird durch eine Führungsgröße, eine Regelgröße und eine Stellgröße beschrieben. Die Stellgröße steuert die gesteuerte Stromquelle, die Regelgröße ist der von der gesteuerten Stromquelle aufgrund der Stellgröße erzeugte Spulenstrom und die Führungsgröße ist der dem Stromregler vorgegebene Sollstrom. Der Stromregler nimmt einen Unterschied zwischen dem Sollstrom und dem erzeugten Spulenstrom als eine Regelabweichung an und minimiert die Regelabweichung. Der Regelkreis weist zur Minimierung der Regelabweichung zum Beispiel proportionales oder integrales oder differentiales Regelverhalten oder auch eine beliebige Kombination der genannten Regelverhalten auf. Ein Regelkreis zum Beispiel mit proportionalem und integralen Regelverhalten wird als PI-Regelkreis und ein Regelkreis mit proportionalem, integralen und differentialen Regelverhalten als PID-Regelkreis bezeichnet.

Die Kommutierung des Spulenstroms im zeitlichen Abstand des durch einen Anfangszeitpunkt und einen Endzeitpunkt bestimmten Kommutierungsintervalls bewirkt eine Umkehr der Richtung des Spulenstroms durch die Spulenanordnung im zeitlichen Abstand des Kommutierungsintervalls. Demzufolge wird auch die Richtung des Magnetfelds im zeitlichen Abstand des Kommutierungsintervalls umgekehrt. Ein derartiges Magnetfeld wird auch als geschaltetes Gleichmagnetfeld bezeichnet. Das geschaltete Gleichmagnetfeld bewirkt, dass sich auch die Richtung der Induktionsspannung im zeitlichen Abstand des Kommutierungsintervalls umkehrt. Dadurch werden Störspannungen, insbesondere Störgleichspannungen und Störwechselspannungen, die durch die Versorgung des magnetisch-induktiven Durchflussmessgeräts an einer Wechselstromquelle erzeugt werden, eliminiert.
Die Spulenanordnung weist für gewöhnlich ein Joch aus einem Material mit einem geringeren magnetischen Widerstand als die Umgebung zur Führung des Magnetfelds im Joch und eine Spule zur Erzeugung des Magnetfelds auf.

Da der Durchfluss des Mediums durch das Messrohr aus der in das Medium durch das Magnetfeld induzierten Induktionsspannung bestimmt wird und die Induktionsspannung proportional sowohl zur Strömungsgeschwindigkeit des Mediums im Messrohr als auch zur Magnetfeldstärke im Medium ist, muss die Magnetfeldstärke im Medium während einer Messung der Induktionsspannung konstant sein. Die Induktionsspannung wird dann als konstant angesehen, wenn die Beeinträchtigung der Messgenauigkeit des Durchflusses durch die Schwankungen der Induktionsspannung als vertretbar angesehen wird. Die Zeitdauer vom Anfang des Kommutierungsintervalls bis zur konstanten Magnetfeldstärke wird als Einschwingzeit bezeichnet. Ist die Magnetfeldstärke während einer Messung der Induktionsspannung nicht konstant, ist der bestimmte Durchfluss mit einem Fehler behaftet. Demnach kann eine Messung der Induktionsspannung erst dann erfolgen, wenn dem Stromregler der konstante Sollstrom vorgegeben wird und der Elektromagnet auf die konstante Magnetfeldstärke eingeschwungen ist. Das Kommutierungsintervall muss mindestens so lang sein wie die Einschwingzeit.
Aus dem Stand der Technik sind gattungsgemäße magnetisch-induktive Durchflussmessgeräte bekannt, bei denen die konstante Magnetfeldstärke eingestellt wird, indem dem Stromregler im Kommutierungsintervall ein konstanter Sollstrom vorgegeben wird. Dokument US4784000-A offenbart ein magnetisch-induktives Durchflussmessgerät wobei in jedem Kommutierungsintervall die einzustellende konstante Magnetfeldstärke durch Spannungsregelung erzeugt ist. Die Messgenauigkeit des Durchflusses kann durch eine Verkürzung des Kommutierungsintervalls vergrößert werden. Insbesondere kann durch eine Verkürzung des Kommutierungsintervalls die Messgenauigkeit bei durch das Messrohr strömenden Medien vergrößert werden, deren Durchfluss im Verhältnis zu dem Kommutierungsintervall kurzfristigen Schwankungen unterliegt. Einer Verkürzung des Kommutierungsintervalls steht jedoch die Einschwingzeit entgegen, die der Elektromagnet zum Einschwingen benötigt, um eine konstante Magnetfeldstärke zu erzeugen.

Der Erfindung liegt daher die Aufgabe zugrunde, ein Verfahren zum Einstellen der konstanten Magnetfeldstärke des Magnetfelds bei einem magnetisch induktiven Durchflussmessgerät sowie ein magnetisch induktives Durchflussmessgerät anzugeben, bei dem die Einschwingzeit im Vergleich zum Stand der Technik verkürzt ist.

Die Erfindung bezieht sich gemäß einer ersten Lehre auf ein Verfahren zum Einstellen der konstanten Magnetfeldstärke des Magnetfelds, bei dem die hergeleitete und aufgezeigte Aufgabe gelöst ist. Das erfindungsgemäße Verfahren ist zunächst im Wesentlichen durch die folgenden Verfahrensschritte gekennzeichnet:
In einem ersten Verfahrensschritt werden innerhalb des Kommutierungsintervalls ein erstes Intervall mit einem Anfangszeitpunkt und einem Endzeitpunkt und ein zweites Intervall mit einem Anfangszeitpunkt und einem Endzeitpunkt angeordnet. Dabei ist das erste Intervall durch den Anfangszeitpunkt und durch den Endzeitpunkt des ersten Intervalls und ist das zweite Intervall durch den Anfangszeitpunkt und dem Endzeitpunkt des zweiten Intervalls bestimmt.

Das erste Intervall und das zweite Intervall können innerhalb des Kommutierungsintervalls verschieden angeordnet werden. Bei jeder Anordnung ist jedoch das erste Intervall zeitlich vor dem zweiten Intervall angeordnet und überlappen das erste Intervall und das zweite Intervall einander nicht. Bei einer ersten Anordnung des ersten Intervalls und des zweiten Intervalls innerhalb des Kommutierungsintervalls fällt der Anfangszeitpunkt des ersten Intervalls mit dem Anfangszeitpunkt des Kommutierungsintervalls zusammen. Bei einer zweiten Anordnung fällt der Endzeitpunkt des zweiten Intervalls mit dem Endzeitpunkt des Kommutierungsintervalls zusammen. Bei einer dritten Anordnung fällt der Endzeitpunkt des ersten Intervalls mit dem Anfangszeitpunkt des zweiten Intervalls zusammen. Eine vierte Anordnung ist eine beliebige Kombination der vorgenannten Anordnungen.

In einem zweiten Verfahrensschritt wird für das erste Intervall ein erster Sollstromverlauf bestimmt. Dabei weicht der erste Sollstromverlauf um einen Differenzstromverlauf vom konstanten Sollstrom derart ab, dass der Differenzstromverlauf gegenüber dem konstanten Sollstrom eine höhere Änderungsrate der Magnetfeldstärke hin zur konstanten Magnetfeldstärke bewirkt. Die Änderungsrate der Magnetfeldstärke hin zur konstanten Magnetfeldstärke ist durch den Differenzstromverlauf gegenüber dem konstanten Sollstrom dann höher, wenn die Änderungsrate des von dem Stromregler erzeugten Spulenstroms höher ist gegenüber der Änderungsrate des vom Stromregler erzeugten Spulenstroms, wenn der kontante Sollstrom dem Stromregler vorgegeben wird. Die höhere Änderungsrate des vom Stromregler erzeugten Spulenstroms wird dadurch erreicht, dass der Differenzstromverlauf eine höhere Regelabweichung im Regelkreis des Stromreglers und der Stromregler aufgrund seines Verhaltens eine höhere Änderungsrate des erzeugten Spulenstroms bewirkt.

In einem dritten Verfahrensschritt wird für das zweite Intervall ein zweiter Sollstromverlauf bestimmt, indem dem zweiten Sollstromverlauf der konstante Sollstrom zugewiesen wird.

In einem vierten Verfahrensschritt wird dem Stromregler im ersten Intervall der erste Sollstromverlauf und im zweiten Intervall der zweite Sollstromverlauf vorgegeben. Der Elektromagnet schwingt im zeitlichen Verlauf des zweiten Intervalls ein, so dass der Elektromagnet die konstante Magnetfeldstärke erzeugt. Die Induktionsspannung, aus der der Durchfluss des Mediums bestimmt wird, wird folglich innerhalb des zweiten Intervalls gemessen, wenn die Magnetfeldstärke konstant ist.

Das erfindungsgemäße Verfahren hat gegenüber dem aus dem Stand der Technik bekannten Verfahren den Vorteil, dass die Einschwingzeit zum Einstellen der konstanten Magnetfeldstärke des Magnetfelds verkürzt ist. Dadurch ist es möglich, das Kommutierungsintervall zu verkürzen, wodurch die Messgenauigkeit insbesondere bei durch das Messrohr strömenden Medien verbessert ist, deren Durchfluss kurzfristigen Schwankungen unterliegt.

Ein Regler wie der Stromregler führt die Regelgröße der Führungsgröße durch die Minimierung der Regelabweichung nach. Das Nachführen der Regelgröße kann dabei höchstens mit einer dem Regler immanenten maximalen Änderungsrate der Regelgröße erfolgen. Die maximale Änderungsrate der Regelgröße ist dem Regler durch seine Ausgestaltung, insbesondere durch sein Regelverhalten, immanent. Die maximale Änderungsrate wird im Englischen als "slew rate" bezeichnet. Wenn die Führungsgröße größer ist als die Führungsgröße, die zum Erreichen der maximalen Änderungsrate der Regelgröße notwendig ist, wird der Regler übersteuert. Um die Einschwingzeit weiter zu verkürzen ist deshalb in einer ersten Ausgestaltung des erfindungsgemäßen Verfahrens vorgesehen, dass der erste Sollstromverlauf derart bestimmt wird, dass der Stromregler durch den ersten Sollstromverlauf an einem Anfang des ersten Intervalls übersteuert wird.

In einer weiteren Ausgestaltung des erfindungsgemäßen Verfahrens ist vorgesehen, dass das erste Intervall derart bestimmt wird, dass es kürzer als eine Einschwingzeitkonstante des Magnetfelds ist. Die Einschwingzeitkonstante des Magnetfelds beschreibt die zeitliche Veränderung der Magnetfeldstärke als Reaktion auf eine sprungförmige Veränderung des Spulenstroms. Die Einschwingzeitkonstante beschreibt demnach die Sprungantwort der Spulenanordnung.

Der erste Sollstromverlauf kann über der Zeit des ersten Intervalls grundsätzlich einen beliebigen Verlauf aufweisen, also eine Funktion der Zeit sein. In einer besonders einfach umzusetzenden Ausgestaltung des Verfahrens ist jedoch vorgesehen, dass der erste Sollstromverlauf derart bestimmt wird, dass er konstant ist. Auch mit dem über der Zeit konstanten ersten Sollstromverlauf wird die Einschwingzeit verkürzt.

In einer weiteren einfach umzusetzenden Ausgestaltung des Verfahrens ist bei Anordnung des ersten Intervalls und des zweiten Intervalls innerhalb des Kommutierungsintervalls vorgesehen, dass als der Anfangszeitpunkt des ersten Intervalls der Anfangszeitpunkt des Kommutierungsintervalls, dass als der Endzeitpunkt des ersten Intervalls der Anfangszeitpunkt des zweiten Intervalls und dass als der Endzeitpunkt des zweiten Intervalls der Endzeitpunkt des Kommutierungsintervalls angenommen wird.

In einer weiteren einfach umzusetzenden Ausgestaltung des Verfahrens ist bei der Anordnung des ersten Intervalls und des zweiten Intervalls vorgesehen, dass der Spulenstrom gemessen wird, das ein Zeitpunkt bestimmt wird, in dem der gemessene Spulenstrom dem ersten Sollstromverlauf oder den zweiten Sollstromverlauf erreicht hat und dass als der Endzeitpunkt des ersten Intervalls und als der Anfangszeitpunkt des zweiten Intervalls der bestimmte Zeitpunkt angenommen wird. In einer besonders bevorzugten Weiterbildung der Ausgestaltung wird diese Ausgestaltung mit der zuvor beschriebenen Ausgestaltung kombiniert. Durch die Kombination der Ausgestaltungen werden das erste Intervall und das zweiter Intervall auf besonders einfache Weise bestimmt.

In einer weiteren Ausgestaltung des Verfahrens wird vorgesehen, dass der erste Sollstromverlauf derart bestimmt wird, dass der Betrag des Differenzstromverlaufs maximal 15 % des Betrags des konstanten Sollstroms beträgt. Diese Ausgestaltung ist insbesondere vorteilhaft in Verbindung mit einem konstanten ersten Sollstromverlauf, da die Umsetzung des Verfahrens für gewöhnlich keine Veränderungen an dem Stromregler erfordert aber eine deutliche Verkürzung der Einschwingzeit bewirkt.

Die Bestimmung des ersten Intervalls und/oder des ersten Sollstromverlaufs kann gemäß verschiedener aufeinander aufbauender Ausgestaltungen des erfindungsgemäße Verfahrens erfolgen.

In einer ersten der aufeinander aufbauenden Ausgestaltungen ist vorgesehen, dass die Magnetfeldstärke oder die durch die Strömung des Mediums im Messrohr im Medium durch das Magnetfeld induzierte Induktionsspannung oder der Spulenstrom oder eine vom Spulenstrom in der Spulenanordnung erzeugte Spulenspannung als eine Indikatorgröße gemessen wird und dass das erste Intervall und/oder der erste Sollstromverlauf unter Verwendung der Indikatorgröße bestimmt werden bzw. wird.

In einer zweiten Ausgestaltung, die auf der ersten Ausgestaltung aufbaut, ist vorgesehen, dass die Indikatorgröße in einem dritten Intervall innerhalb des zweiten Intervalls gemessen wird. Der Ausgestaltung liegt die Erkenntnis zugrunde, dass der Elektromagnet dann eingeschwungen ist und die konstante Magnetfeldstärke erzeugt, wenn auch die gemessene Indikatorgröße konstant ist. Die Messung der Induktionsspannung, aus der dann der Durchfluss bestimmt wird, erfolgt vorzugsweise auch innerhalb des dritten Intervalls.

In einer dritten Ausgestaltung, die auf der ersten oder der zweiten Ausgestaltung aufbaut, ist vorgesehen, dass eine Bewertungsgröße gebildet wird, indem mindestens ein erster Messwert und ein zweiter Messwert der Indikatorgröße gemessen werden, der Mittelwert gebildet wird und von dem ersten Messwert der Mittelwert subtrahiert wird und dass das erste Intervall und/oder der erste Sollstromverlauf unter Verwendung der Bewertungsgröße bestimmt werden bzw. wird. Der Mittelwert ist dabei der arithmetische Mittelwert aus dem mindestens ersten Messwert und dem zweiten Messwert. Die Qualität der Indikatorgröße steigt mit der Anzahl der Messwerte, wobei eine Anzahl von ca. tausend Messwerten einen guten Kompromiss zwischen Aufwand der Mittelwertbildung und Qualität der Indikatorgröße darstellt.

In einer vierten Ausgestaltung, die auf der dritten Ausgestaltung aufbaut, ist vorgesehen, dass eine Trendgröße bestimmt wird, in dem die Bewertungsgröße im zweiten Intervall des Kommutierungsintervalls und im zweiten Intervall mindestens eines weiteren Kommutierungsintervalls bestimmt wird und die Veränderung der Bewertungsgröße bestimmt wird und dass das erste Intervall und/oder der erste Sollstromverlauf unter Verwendung der Trendgröße bestimmt werden bzw. wird. Die Trendgröße kann weitergebildet werden, in dem mit ihr ein gleitender Mittelwert gebildet wird und dieser zur Bestimmung des ersten Intervalls und/oder des ersten Sollstromverlaufs verwendet wird.

Es ist erkannt worden, dass eine Berücksichtigung einer Temperatur des magnetisch-induktiven Durchflussmessgeräts bei der Bestimmung des ersten Intervalls und/oder des ersten Sollstromintervalls die Messgenauigkeit des magnetisch-induktiven Durchflussmessgeräts verbessert. Deshalb ist in einer weiteren Ausgestaltung des Verfahrens vorgesehen, dass eine Temperatur am magnetisch-induktiven Durchflussmessgerät gemessen wird und dass die gemessene Temperatur bei der Bestimmung des ersten Intervalls und/oder des ersten Sollstromintervalls verwendet wird. In einer Weiterbildung der Ausgestaltung ist vorgesehen, dass die Temperatur der Spulenanordnung und/oder des Mediums und/oder eine Prozesstemperatur gemessen wird. Insbesondere ist die Temperatur der Spulenanordnung von Bedeutung, da die Temperatur der Spulenanordnung unmittelbar Einfluss auf den Widerstand und die Induktivität der Spulenanordnung hat.

Die Erfindung bezieht sich gemäß einer zweiten Lehre auf ein magnetisch-induktives Durchflussmessgerät, bei dem die hergeleitete und aufgezeigte Aufgabe gelöst ist. Das erfindungsgemäße magnetisch-induktive Durchflussmessgerät ist zunächst und im Wesentlichen dadurch gekennzeichnet, dass die Steuerungseinrichtung eine konstante Magnetfeldstärke des Magnetfelds innerhalb des Kommutierungsintervalls einstellt.

Die Einstellung erfolgt, in dem die Steuerungseinrichtung zunächst innerhalb des Kommutierungsintervalls ein erstes Intervall mit einem Anfangszeitpunkt und einem Endzeitpunkt und ein zweites Intervall mit einem Anfangszeitpunkt und einem Endzeitpunkt anordnet. Dann bestimmt die Steuerungseinrichtung für das erste Intervall einen ersten Sollstromverlauf, wobei der erste Sollstromverlauf um einen Differenzstromverlauf vom konstanten Sollstrom derart abweicht, dass der Differenzstromverlauf gegenüber dem konstanten Sollstrom eine höhere Änderungsrate der Magnetfeldstärke hin zur konstanten Magnetfeldstärke bewirkt. Dann bestimmt die Steuerungseinrichtung für das zweite Intervall einen zweiten Sollstromverlauf, indem die Steuerungseinrichtung dem zweiten Sollstromverlauf den konstanten Sollstrom zuweist. Weiterhin gibt die Steuerungseinrichtung dem Stromregler im ersten Intervall den ersten Sollstromverlauf und im zweiten Intervall den zweiten Sollstromverlauf vor.

In einer ersten Ausgestaltung des erfindungsgemäßen magnetisch-induktiven Durchflussmessgeräts ist vorgesehen, dass der Elektromagnet eine Kommutierungseinrichtung aufweist und die Kommutierungseinrichtung den Spulenstrom kommutiert. Bei der Kommutierungseinrichtung handelt es sich zum Beispiel um eine H-Brückenschaltung, in der vier Schalter derart angeordnet sind und von dem Elektromagneten derart betätigt werden, dass die Richtung des Spulenstroms durch die Spulenanordnung im zeitlichen Abstand des Kommutierungsintervalls umgekehrt wird. In einer alternativen Ausgestaltung erzeugt der Stromregler selbst den kommutierten Spulenstrom, wodurch eine separate Kommutierungseinrichtung überflüssig ist.

In einer weiteren Ausgestaltung des erfindungsgemäßen magnetisch-induktiven Durchflussmessgeräts ist vorgesehen, dass die Steuerungseinrichtung zur Ausführung eines der zuvor beschriebenen erfindungsgemäßen Verfahren ausgebildet ist.

Die Ausführungen zu dem erfindungsgemäßen Verfahren geltend entsprechend auch für das erfindungsgemäße kernmagnetische Durchflussmessgerät und umgekehrt.

Im Einzelnen ist eine Vielzahl von Möglichkeiten gegeben, das erfindungsgemäße Verfahren und das erfindungsgemäße magnetisch-induktive Durchflussmessgerät auszugestalten und weiterzubilden. Dazu wird verwiesen sowohl auf die den Patentansprüchen 1 und 13 nachgeordneten Patentansprüche als auch auf die nachfolgende Beschreibung eines bevorzugten Ausführungsbeispiels in Verbindung mit der Zeichnung. In der Zeichnung zeigt:
- Fig. 1: ein Ausführungsbeispiel eines magnetisch-induktiven Durchflussmessgeräts,
- Fig. 2a: einen schematisch dargestellten Sollstromverlauf über der Zeit,
- Fig. 2b: einen schematisch dargestellten gemessenen kommutierten Spulenstrom über der Zeit,
- Fig. 2c: eine schematisch dargestellte gemessene Spulenspannung über der Zeit und
- Fig. 2d: eine schematisch dargestellte magnetische Feldstärke eines Magnetfelds über der Zeit.

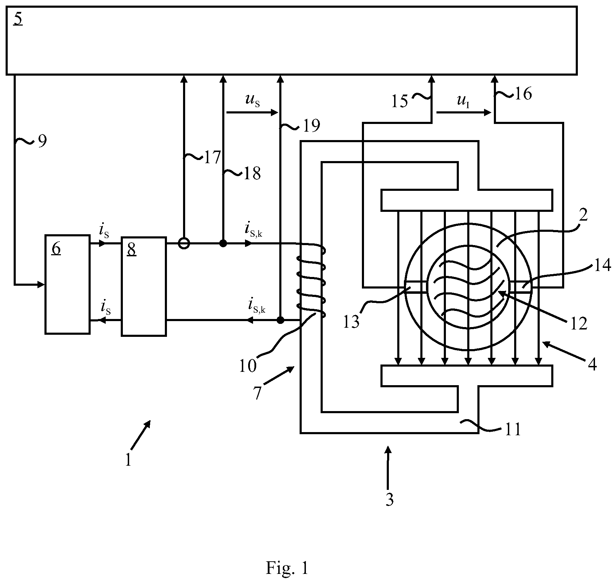

Fig. 1 zeigt das magnetisch-induktive Durchflussmessgerät 1 im Betrieb. Das magnetisch-induktive Durchflussmessgerät 1 weist das Messrohr 2, den Elektromagneten 3 zur Erzeugung des Magnetfelds 4 und die Steuerungseinrichtung 5 auf. Das Messrohr 2 ist in einer geschnittenen Aufsicht dargestellt. Der Elektromagnet 3 weist wiederum den Stromregler 6, die Spulenanordnung 7 und die Kommutierungseinrichtung 8 auf.

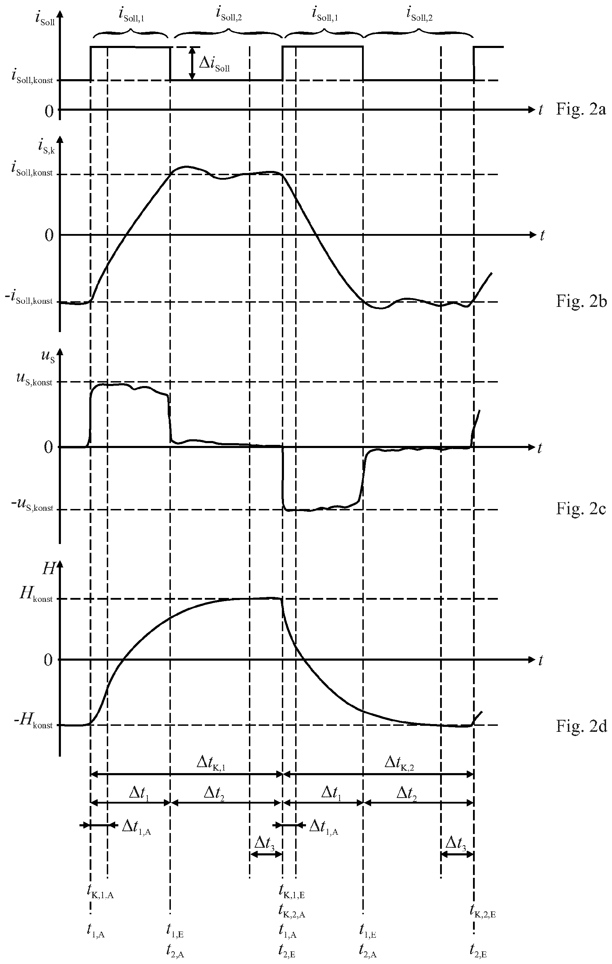

Der Stromregler 6 in diesem Ausführungsbeispiel ist ein analoger Stromregler und weist eine einzige gesteuerte Stromquelle, die den Spulenstrom is erzeugt, und einen Regelkreis auf. Die Funktion des Regelkreises wird durch eine Führungsgröße, eine Regelgröße und eine Stellgröße beschrieben. Die Stellgröße steuert die gesteuerte Stromquelle, die Regelgröße ist der von der gesteuerten Stromquelle aufgrund der Stellgröße erzeugte Spulenstrom is und die Führungsgröße ist der dem Stromregler 6 vorgegebene Sollstrom, siehe Fig. 2a. Der Sollstrom wird dem Stromregler 6 von der Steuerungseinrichtung 5 vorgegeben. Die Steuerungseinrichtung 5 generiert dazu das den Sollstrom beschreibende Signal mit einem Mikrocontroller und einem Digital-Analog-Umsetzer und überträgt das Signal dann über den ersten Signalpfad 9 zu dem Stromregler 6.

Der Stromregler 6 nimmt einen Unterschied zwischen dem vorgegebenen Sollstrom und dem erzeugten Spulenstrom is als eine Regelabweichung an und minimiert die Regelabweichung, wodurch die Regelgröße der Führungsgröße nachgeführt wird. Das Nachführen der Regelgröße kann dabei höchstens mit der dem Stromregler 6 immanenten maximalen Änderungsrate der Regelgröße erfolgen. Die maximale Änderungsrate der Regelgröße ist dem Stromregler 6 durch sein Regelverhalten immanent. Der Regelkreis weist zur Minimierung der Regelabweichung in diesem Ausführungsbeispiel sowohl proportionales als auch integrales als auch differentiales Regelverhalten auf. Demnach handelt es sich bei dem Stromregler 6 um einen PID-Stromregler. Wenn die Führungsgröße größer ist als die Führungsgröße, die zum Erreichen der maximalen Änderungsrate der Regelgröße notwendig ist, wird der Stromregler übersteuert.

Die Kommutierungseinrichtung 8 weist in diesem Ausführungsbeispiel eine H-Brückenschaltung mit vier Schaltern auf, die derart angeordnet sind und betrieben werden, dass der Spulenstrom *i*_{S} im zeitlichen Abstand des Kommutierungsintervalls Δ*t*_{K} kommutiert wird, so dass sich der kommutierte Spulenstrom *i*_{S,k} ergibt, siehe Fig. 2b. Der kommutierte Spulenstrom *i*_{S,k} unterscheidet sich von dem Spulenstrom *i*_{S} ausschließlich dadurch, dass der kommutierte Spulenstrom *i*_{S,k} im zeitlichen Abstand des Kommutierungsintervalls Δ*t*_{K} seine Richtung umkehrt. Der kommutierte Spulenstrom *i*_{S,k} bewirkt die Spulenspannung *u*ₛ, siehe Fig. 2c und die Magnetfeldstärke *H*, siehe 2d. Die Spulenspannung *u*ₛ ist ohne einen durch einen ohmschen Widerstand der Spule 10 verursachte Spannungsanteil dargestellt. In einem alternativen Ausführungsbeispiel erzeugt die einzige Stromquelle den kommutierten Spulenstrom *i*_{S,k} direkt.

Die Spulenanordnung 7 weist die Spule 10 und das Joch 11 auf. Die Spule 10 ist in einem Abschnitt des Jochs 11 um das Joch 11 gewickelt und das Joch 11 besteht aus einem Material mit einem geringen magnetischen Widerstand, so dass das von dem kommutierten Spulenstrom i_{S},ₖ in der Spule 10 erzeugte Magnetfeld 4 sich vorzugsweise im Joch 11 ausbreitet. Das Joch 11 ist derart ausgestaltet, dass es einen magnetischen Kreis mit einem Luftspalt bildet, wobei im Luftspalt das Messrohr 2 angeordnet ist. In Fig. 1 ist nur das Magnetfeld 4 im Luftspalt schematisch dargestellt. Das Magnetfeld 4 durchsetzt das Messrohr 2 und das durch das Messrohr strömende Medium 12 zumindest teilweise. Dabei ist die Richtung des Magnetfelds 4 senkrecht zur Strömungsrichtung des Mediums 12, wodurch in das Medium 12 ein Potentialverlauf induziert wird, dessen Richtung sowohl senkrecht zur Richtung des Magnetfelds 4 als auch senkrecht zur Strömungsrichtung des Mediums 12 ausgerichtet ist.

Die Wand des Messrohrs 2 besteht aus einem Material, welches für Magnetfelder transparent ist, also das Magnetfeld 4 nicht beeinflusst. In der Wand des Messrohrs 2 sind gegenüberliegend zwei Ausnehmungen, wobei in der einen Ausnehmung die erste Messelektrode 13 und in der anderen Ausnehmung die zweite Messelektrode 14 angeordnet ist. Die erste Messelektrode 13 und die zweite Messelektrode 14 sind im galvanischen Kontakt mit dem Medium 12. Zwischen der ersten Messelektrode 13 und der zweiten Messelektrode 14 liegt die durch den Potentialverlauf im Medium 12 verursachte Induktionsspannung *u*_{I} an. Die Steuerungseinrichtung 5 misst die Induktionsspannung *u*_{I} über den zweiten Signalpfad 15 und den dritten Signalpfad 16.

Die Steuerungseinrichtung 5 misst neben der Induktionsspannung *u*_{I} auch noch über den vierten Signalpfad 17 den kommutierten Spulenstrom *i*_{S,k} und über den fünften Signalpfad 18 und den sechsten Signalpfad 19 die Spulenspannung *u*_{S}.

Der Elektromagnet 3 erzeugt, wenn die Steuerungseinrichtung 5 dem Stromregler 6 über den ersten Signalpfad 9 den konstanten Sollstrom *i*_{Soll,konst} vorgibt, eingeschwungen die konstante Magnetfeldstärke *H*ₖₒₙₛₜ. Das Einschwingen des Magnetfelds bedeutet, dass in dem Zeitpunkt, ab dem der konstante Sollstrom *i*_{Soll,konst} durch die Spule 10 fließt, noch nicht die konstante Magnetfeldstärke *H*ₖₒₙₛₜ im Medium 12 vorhanden ist. Das Einschwingen des Magnetfelds 4 wird im Wesentlichen durch Materialeigenschaften des Jochs 11 verursacht. Es ist erkannt worden, dass diese Materialeigenschaften den Materialeigenschaften ähnlich sind, die bei ferromagnetischen Materialien Hysterese verursachen.

Die Steuerungseinrichtung 5 stellt in diesem Ausführungsbeispiel innerhalb des ersten Kommutierungsintervalls Δ*t*_{K,1} mit dem Anfangszeitpunkt *t*_{K,1,A} und dem Endzeitpunkt *t*_{K,1,E} die konstante Magnetfeldstärke *H*ₖₒₙₛₜ und innerhalb des zweiten Kommutierungsintervalls Δ*t*_{K,2} mit dem Anfangszeitpunkt *t*_{K,2,A} und dem Endzeitpunkt *t*_{K,2,E} die konstante Magnetfeldstärke -*H*ₖₒₙₛₜ durch Ausführung des Verfahrens ein, das im Folgenden in Verbindung mit den Fig. 2a bis 2d beschrieben wird.

In den Fig. 2a bis 2d sind das erste Kommutierungsintervall Δ*t*_{K,1} und das zweite Kommutierungsintervall Δ*t*_{K,2} vollständig dargestellt, wobei der Endzeitpunkt *t*_{K,1,E} des ersten Kommutierungsintervalls Δ*t*_{K,1} mit dem Anfangszeitpunkt *t*_{K,2,A} des zweiten Kommutierungsintervalls Δ*t*_{K,2} zusammenfällt. Sie unterscheiden sich dadurch voneinander, dass der Spulenstrom *i*_{S} während des ersten Kommutierungsintervalls Δ*t*_{K,1} in einer Richtung durch die Spule 10 fließt und der Spulenstrom *i*_{S} während des zweiten Kommutierungsintervalls *Δt*_{K*,*2} in umgekehrter Richtung durch die Spule 10 fließt. Die Kommutierung des Spulenstrom *i*_{S} erfolgt durch die Kommutierungseinrichtung 8. Im Folgenden wird nur auf das erste Kommutierungsintervall Δ*t*_{K,1} Bezug genommen. Die Ausführungen für das erste Kommutierungsintervall Δ*t*_{K,1} gelten auch für zweite Kommutierungsintervall Δ*t*_{K*,*2} und sowohl für die dem ersten Kommutierungsintervall Δ*t*_{K,1} vorangehenden als auch für die dem zweiten Kommutierungsintervall Δ*t*_{K*,*2} nachfolgenden Kommutierungsintervalle.

In einem ersten Schritt des Verfahrens ordnet die Steuerungseinrichtung 5 innerhalb des ersten Kommutierungsintervalls Δ*t*_{K,1} das erste Intervall Δ*t*₁ mit dem Anfangszeitpunkt *t*_{1,A} und dem Endzeitpunkt *t*_{1,E} und das zweite Intervall Δ*t*₂ mit dem Anfangszeitpunkt *t*_{2,A} und einem Endzeitpunkt *t*_{2,E} an. In diesem Ausführungsbeispiel fallen der Anfangszeitpunkt *t*_{1,A} des ersten Intervalls Δ*t*₁ mit dem Anfangszeitpunkt *t*_{K,1,A} des ersten Kommutierungsintervalls Δ*t*_{K,1}, der Endzeitpunkt *t*_{1,E} des ersten Intervalls Δ*t*₁ mit dem Anfangszeitpunkt *t*_{2,A} des zweiten Intervalls Δ*t*₂ und der Endzeitpunkt *t*_{2,E} des zweiten Intervalls Δ*t*₂ mit dem Endzeitpunkt *t*_{K,1,E} des ersten Kommutierungsintervalls Δ*t*_{K,1} zusammen.

In einem zweiten Schritt des Verfahrens bestimmt die Steuerungseinrichtung 5 für das erste Intervall Δ*t*₁ den ersten Sollstromverlauf *i*_{Soll,1}, wobei der erste Sollstromverlauf *i*_{Soll,1} um den Differenzstromverlauf Δ*i*_{Soll} vom konstanten Sollstrom *i*_{Soll,konst} derart abweicht, dass der Differenzstromverlauf Δ*i*_{Soll} gegenüber dem konstanten Sollstrom *i*_{Soll,konst} eine höhere Änderungsrate der Magnetfeldstärke *H* hin zur konstanten Magnetfeldstärke *H*ₖₒₙₛₜ bewirkt. Der erste Sollstromverlauf *i*_{Soll,1} ist in diesem Ausführungsbeispiel im gesamten ersten Intervall Δ*t*₁ konstant. Der Betrag des ersten Sollstromverlaufs *i*_{Soll,1} ist um den Betrag des Differenzstromverlaufs Δ*i*_{Soll} größer als der Betrag des konstanten Sollstroms *i*_{Soll,konst}. Durch den größeren Betrag des ersten Sollstromverlaufs *i*_{Soll,1} gegenüber dem Betrag des konstanten Sollstroms *i*_{Soll,konst} wird die höhere Änderungsrate der Magnetfeldstärke *H* hin zur konstanten Magnetfeldstärke *H*ₖₒₙₛₜ bewirkt. Die Zeitdauer vom Anfangszeitpunkt *t*_{K,1,A} des ersten Kommutierungsintervalls Δ*t*_{K,1} bis zur konstanten Magnetfeldstärke *H*ₖₒₙₛₜ wird als Einschwingzeit bezeichnet. Durch die höhere Änderungsrate der Magnetfeldstärke *H* wird die Einschwingzeit verkürzt. Darüber hinaus bewirkt der erste Sollstromverlauf *i*_{Soll,1} am Anfang Δ*t*_{1,A} des ersten Intervalls Δ*t*₁, dass der Stromregler 6 übersteuert wird, wodurch die Einschwingzeit weiter verkürzt wird.

Die Steuerungseinrichtung 5 bestimmt im vorliegenden Ausführungsbeispiel den Endzeitpunkt *t*_{1,A} des ersten Intervalls Δ*t*₁*,* indem die Steuerungseinrichtung 5 den kommutierten Spulenstrom *i*_{S,k} über den vierten Signalpfad 17 misst, den Zeitpunkt bestimmt, in dem der gemessene kommutierte Spulenstrom *i*_{S,k} den konstanten Sollstrom *i*_{Soll,konst} erreicht und diesen Zeitpunkt als Endzeitpunkt *t*_{1,E} des ersten Intervalls Δ*t*₁ annimmt. Dadurch, dass zum einen der Anfangszeitpunkt *t*_{1,A} des ersten Intervalls Δ*t*₁ mit dem Anfangszeitpunkt *t*_{K,1,A} des ersten Kommutierungsintervalls Δ*t*_{K,1} und der Endzeitpunkt *t*_{2,E} des zweiten Intervalls Δ*t*₂ mit dem Endzeitpunkt des ersten Kommutierungsintervalls Δ*t*_{K,1} zusammenfallen und dass zum anderen der Endzeitpunkt *t*_{1,E} des ersten Intervalls Δ*t*₁ und der Anfangszeitpunkt *t*_{2,A} des zweiten Intervalls Δ*t*₂ mit dem Zeitpunkt zusammenfallen, in dem der kommutierte Spulenstrom *i*_{S,k} den konstanten Sollstrom *i*_{Soll,konst} erreicht hat, sind sowohl das erste Intervall Δ*t*₁ als auch das zweite Intervall Δ*t*₂ vollständig bestimmt.

In einem dritten Schritt des Verfahrens bestimmt die Steuerungseinrichtung 5 für das zweite Intervall Δ*t*₂ den zweiten Sollstromverlauf *i*_{Soll,2}, indem die Steuerungseinrichtung 5 dem zweiten Sollstromverlauf *i*_{Soll,2} den konstanten Sollstrom *i*_{Soll,konst} zuweist.

In einem vierten Schritt des Verfahrens gibt die Steuerungseinrichtung 5 dem Stromregler 6 im ersten Intervall A*t*₁ den ersten Sollstromverlauf *i*_{Soll,1} und im zweiten Intervall Δ*t*₂ den zweiten Sollstromverlauf *i*_{Soll,2} vor.

Zusätzlich führt die Steuerungseinheit 5 in diesem Ausführungsbeispiel ein Verfahren zur adaptiven Anpassung des Betrags des ersten Sollstromverlaufs *i*_{Soll,1} aus. Das Verfahren umfasst die Bestimmung einer Bewertungsgröße in mindestens dem ersten Kommutierungsintervall Δ*t*_{K,1} und dem zweiten Kommutierungsintervall Δ*t*_{K,1}. Die Bestimmung der Bewertungsgröße ist für alle Kommutierungsintervalle gleich, weshalb sie im Folgenden nur für das erste Kommutierungsintervall beschrieben wird.

Die Steuerungseinrichtung 5 misst zunächst die durch den kommutierten Spulenstrom *i*_{S,k}, siehe Fig. 2b, in der Spule 10 verursachte Spulenspannung *u*_{S}, siehe Fig. 2c, über den fünften Signalpfad 18 und den sechsten Signalpfad 19 in dem dritten Intervall Δ*t*₃, das innerhalb des zweiten Intervalls Δ*t*₂ angeordnet ist, als eine Indikatorgröße. Der Annahme der Spulenspannung *u*_{S} als Indikatorgröße liegt die Erkenntnis zugrunde, dass, wenn sowohl der kommutierte Spulenstrom *i*_{S,k} als auch die Magnetfeldstärke *H*, siehe Fig. 2d, konstant sind, auch die Spulenspannung *u*_{S} konstant ist. Wenn zwar der kommutierte Spulenstrom *i*_{S,k} konstant ist, aber nicht die Magnetfeldstärke *H* konstant ist, ist auch nicht die Spulenspannung *u*_{S} konstant und der zeitliche Verlauf der Spulenspannung us enthält Informationen über den zeitlichen Verlauf der Magnetfeldstärke *H*. Die Steuerungseinrichtung 5 bildet dann aus der Indikatorgröße die Bewertungsgröße, indem in diesem Ausführungsbeispiel eintausend Messwerte der Indikatorgröße gemessen werden, der arithmetische Mittelwert über die tausend Messwerte gebildet wird und von dem ersten Messwert der Mittelwert subtrahiert wird.

Die Steuerungseinrichtung 5 bestimmt dann aus der Bewertungsgröße mindestens des ersten Kommutierungsintervalls Δ*t*_{K,1} und des zweiten Kommutierungsintervalls Δ*t*_{K,2} eine Trendgröße, indem eine Veränderung der Bewertungsgröße über die Kommutierungsintervalle bestimmt wird. Unter Verwendung der Trendgröße wird der Betrag des ersten Sollstromverlaufs *i*_{Soll,1} adaptiv angepasst.

### Bezugszeichen:

- 1: Magnetisch-induktives Durchflussmessgerät
- 2: Messrohr
- 3: Elektromagnet
- 4: Magnetfeld
- 5: Steuerungseinrichtung
- 6: Stromregler
- 7: Spulenanordnung
- 8: Kommutierungseinrichtung
- 9: Erster Signalpfad
- 10: Spule
- 11: Joch
- 12: Medium
- 13: Erste Messelektrode
- 14: Zweite Messelektrode
- 15: Zweiter Signalpfad
- 16: Dritter Signalpfad
- 17: Vierter Signalpfad
- 18: Fünfter Signalpfad
- 19: Sechster Signalpfad

- *H*: Magnetfeldstärke
- *H*ₖₒₙₛₜ: Konstante Magnetfeldstärke
- *i*: Strom
- *i*_{S}: Spulenstrom
- *i*_{S,k}: Kommutierter Spulenstrom
- *i*_{Soll,konst}: Konstanter Sollstrom
- *i*_{Soll,1}: Erster Sollstromverlauf
- *i*_{Soll,2}: Zweiter Sollstromverlauf
- Δ*i*_{Soll}: Differenzstromverlauf
- *u*_{S}: Spulenspannung
- *u*_{S,konst}: Konstante Spulenspannung
- *u*_{I}: Induktionsspannung
- *t*: Zeit
- Δ*t*_{K,1}: Erstes Kommutierungsintervall
- *t*_{K,1,A}: Anfang des ersten Kommutierungsintervalls
- *t*_{K,1,E}: Ende des ersten Kommutierungsintervalls
- Δ*t*_{K*,*2}: Zweites Kommutierungsintervall
- *t*_{K,2,A}: Anfang des zweiten Kommutierungsintervalls
- *t*_{K,2,E}: Ende des zweiten Kommutierungsintervalls
- Δ*t*₁: Erstes Intervall
- Δ*t*_{1,A}: Anfang des ersten Intervalls
- *t*_{1,A}: Anfangszeitpunkt des ersten Intervalls
- *t*_{1,E}: Endzeitpunkt des ersten Intervalls
- Δ*t*₂: Zweites Intervall
- *t*_{2,A}: Anfangszeitpunkt des zweiten Intervalls
- *t*_{2,E}: Endzeitpunkt des zweiten Intervalls
- Δ*t*₃: Drittes Intervall

## Patentansprüche

1. Verfahren zum Einstellen einer konstanten Magnetfeldstärke (*H*ₖₒₙₛₜ) eines Magnetfelds (4) innerhalb eines Kommutierungsintervalls (*t*_{K,1}) bei einem magnetisch-induktiven Durchflussmessgerät (1) mit einem Messrohr (2) und einem Elektromagneten (3) zur Erzeugung des Magnetfelds (4),
wobei der Elektromagnet (3) einen Stromregler (6) und eine Spulenanordnung (7) aufweist, der Stromregler (6) einen Spulenstrom (*i*_{S}) erzeugt und der erzeugte Spulenstrom (*i*_{S}) in der Spulenanordnung (7) das Magnetfeld (4) bewirkt,
wobei der Stromregler (6) eine einzige gesteuerte Stromquelle und einen Regelkreis aufweist und die Stromquelle den Spulenstrom (*i*_{S}) erzeugt,
wobei der Spulenstrom (is) im zeitlichen Abstand des Kommutierungsintervalls (*t*_{K,1}) kommutiert wird und
wobei der Elektromagnet (3), wenn ein konstanter Sollstrom (*i*_{Soll,konst}) dem Stromregler (6) vorgegeben wird, eingeschwungen die konstante Magnetfeldstärke (*H*ₖₒₙₛₜ) erzeugt,
**dadurch gekennzeichnet,**
**dass** innerhalb des Kommutierungsintervalls (*t*_{K,1}) ein erstes Intervall (*t*₁) mit einem Anfangszeitpunkt (*t*_{1,A}) und einem Endzeitpunkt (*t*_{1,E}) und ein zweites Intervall (*t*₂) mit einem Anfangszeitpunkt (*t*_{2,A}) und einem Endzeitpunkt (*t*_{2,E}) angeordnet werden,
**dass** für das erste Intervall (*t*₁) ein erster Sollstromverlauf (*i*_{Soll,1}) bestimmt wird, wobei der erste Sollstromverlauf (*i*_{Soll,1}) um einen Differenzstromverlauf (*i*_{Soll}) vom konstanten Sollstrom (*i*_{Soll,konst}) derart abweicht, dass der Differenzstromverlauf (*i*_{Soll}) gegenüber dem konstanten Sollstrom (*i*_{Soll,konst}) eine höhere Änderungsrate der Magnetfeldstärke hin zur konstanten Magnetfeldstärke (*H*ₖₒₙₛₜ) bewirkt,
**dass** für das zweite Intervall (*t*₂) ein zweiter Sollstromverlauf (*i*_{Soll,2}) bestimmt wird, indem dem zweiten Sollstromverlauf (*i*_{Soll,2}) der konstante Sollstrom (*i*_{Soll,konst}) zugewiesen wird und
**dass** dem Stromregler (6) im ersten Intervall (*t*₁) der erste Sollstromverlauf (*i*_{Soll,1}) und im zweiten Intervall (*t*₂) der zweite Sollstromverlauf (*i*_{Soll,2}) vorgegeben wird.

2. Verfahren nach Anspruch 1, **dadurch gekennzeichnet, dass** der erste Sollstromverlauf (*i*_{Soll,1}) derart bestimmt wird, dass der Stromregler (6) durch den ersten Sollstromverlauf (*i*_{Soll,1}) an einem Anfang (*t*_{1,A}) des ersten Intervalls (*t*₁) übersteuert wird.

3. Verfahren nach Anspruch 1 oder 2, **dadurch gekennzeichnet, dass** das erste Intervall (*t*₁) derart bestimmt wird, dass es kürzer als eine Einschwingzeitkonstante des Magnetfelds (4) ist.

4. Verfahren nach einem der Ansprüche 1 bis 3, **dadurch gekennzeichnet, dass** der erste Sollstromverlauf (*i*_{Soll,1}) derart bestimmt wird, dass er konstant ist.

5. Verfahren nach einem der Ansprüche 1 bis 4, **dadurch gekennzeichnet, dass** der Spulenstrom (*i*_{S}) gemessen wird, dass ein Zeitpunkt bestimmt wird, in dem der gemessene Spulenstrom (*i*_{S}) den ersten Sollstromverlauf (*i*_{Soll,1}) oder den zweiten Sollstromverlauf (*i*_{Soll,2}) erreicht hat und dass als der Endzeitpunkt (*t*_{1,E}) des ersten Intervalls (*t*₁) und als der Anfangszeitpunkt (*t*_{2,A}) des zweiten Intervalls (*t*₂) der bestimmte Zeitpunkt angenommen wird.

6. Verfahren nach einem der Ansprüche 1 bis 5, **dadurch gekennzeichnet, dass** der erste Sollstromverlauf (*i*_{Soll,1}) derart bestimmt wird, dass der Betrag des Differenzstromverlaufs (*i*_{Soll}) maximal 15 % des Betrags des konstanten Sollstroms (*i*_{Soll,konst}) beträgt.

7. Verfahren nach einem der Ansprüche 1 bis 6, **dadurch gekennzeichnet, dass** die Magnetfeldstärke (*H*) oder eine durch eine Strömung eines Mediums (12) im Messrohr (2) im Medium (12) durch das Magnetfeld (4) induzierte Induktionsspannung (*u*_{I}) oder der Spulenstrom (*i*_{S}) oder eine vom Spulenstrom (*i*_{S}) in der Spulenanordnung (7) erzeugte Spulenspannung (*u*_{S}) als eine Indikatorgröße gemessen wird und dass das erste Intervall (*t*₁) und/oder der erste Sollstromverlauf (*i*_{Soll,1}) unter Verwendung der Indikatorgröße bestimmt werden bzw. wird.

8. Verfahren nach Anspruch 7, **dadurch gekennzeichnet, dass** die Indikatorgröße in einem dritten Intervall (*t*₃) innerhalb des zweiten Intervalls (*t*₂) gemessen wird.

9. Verfahren nach Anspruch 7 oder 8, **dadurch gekennzeichnet, dass** eine Bewertungsgröße gebildet wird, indem mindestens ein erster Messwert und ein zweiter Messwert der Indikatorgröße gemessen werden, der Mittelwert gebildet wird und von dem ersten Messwert der Mittelwert subtrahiert wird und dass das erste Intervall (*t*₁) und/oder der erste Sollstromverlauf (*i*_{Soll,1}) unter Verwendung der Bewertungsgröße bestimmt werden bzw. wird.

10. Verfahren nach Anspruch 9, **dadurch gekennzeichnet, dass** eine Trendgröße bestimmt wird, indem die Bewertungsgröße im zweiten Intervall (*t*₂) des Kommutierungsintervalls (*t*_{K,1}) und im zweiten Intervall (*t*₂) mindestens eines weiteren Kommutierungsintervalls (*t*_{K,2}) bestimmt wird und die Veränderung der Bewertungsgröße bestimmt wird und dass das erste Intervall (*t*₁) und/oder der erste Sollstromverlauf (*i*_{Soll,1}) unter Verwendung der Trendgröße bestimmt werden bzw. wird.

11. Verfahren nach einem der Ansprüche 1 bis 10, **dadurch gekennzeichnet, dass** eine Temperatur am magnetisch-induktiven Durchflussmessgerät (1) gemessen wird und dass die gemessene Temperatur bei der Bestimmung des ersten Intervalls (*t*₁) und/oder des ersten Sollstromverlaufs (*i*_{Soll,1}) verwendet wird.

12. Verfahren nach Anspruch 11, **dadurch gekennzeichnet, dass** die Temperatur der Spulenanordnung (7) und/oder des Mediums (12) gemessen wird.

13. Magnetisch-induktives Durchflussmessgerät (1) mit einem Messrohr (2), einem Elektromagneten (3) zur Erzeugung eines Magnetfelds (4) und einer Steuerungseinrichtung (5),
wobei der Elektromagnet (3) einen Stromregler (6) und eine Spulenanordnung (7) aufweist, der Stromregler (6) einen Spulenstrom (*i*_{S}) erzeugt und der erzeugte Spulenstrom (*i*_{S}) in der Spulenanordnung (7) das Magnetfeld (4) bewirkt,
wobei der Stromregler (6) eine einzige gesteuerte Stromquelle und einen Regelkreis aufweist und die Stromquelle den Spulenstrom (*i*_{S}) erzeugt,
wobei der Elektromagnet (3) den Spulenstrom (*i*_{S}) im zeitlichen Abstand eines Kommutierungsintervalls (*t*_{K,1}) kommutiert und
wobei der Elektromagnet (3), wenn die Steuerungseinrichtung (5) dem Stromregler (6) einen konstanten Sollstrom (*i*_{Soll,konst}) vorgibt, eingeschwungen eine konstante Magnetfeldstärke (*H*ₖₒₙₛₜ) des Magentfelds (4) erzeugt,
**dadurch gekennzeichnet,**
**dass** die Steuerungseinrichtung (5) die konstante Magnetfeldstärke (*H*ₖₒₙₛₜ) des Magnetfelds (4) innerhalb des Kommutierungsintervalls (*t*_{K,1}) einstellt,
indem die Steuerungseinrichtung (5) innerhalb des Kommutierungsintervalls (*t*_{K,1}) ein erstes Intervall (*t*₁) mit einem Anfangszeitpunkt (*t*_{1,A}) und einem Endzeitpunkt (*t*_{1,E}) und ein zweites Intervall (*t*₂) mit einem Anfangszeitpunkt (*t*_{2,A}) und einem Endzeitpunkt (*t*_{2,E}) anordnet,
indem die Steuerungseinrichtung (5) für das erste Intervall (*t*₁) einen ersten Sollstromverlauf (*i*_{Soll,1}) bestimmt, wobei der erste Sollstromverlauf (*i*_{Soll,1}) um einen Differenzstromverlauf (*i*_{Soll}) vom konstanten Sollstrom (*i*_{Soll,konst}) derart abweicht, dass der Differenzstromverlauf (*i*_{Soll}) gegenüber dem konstanten Sollstrom (*i*_{Soll,konst}) eine höhere Änderungsrate der Magnetfeldstärke (*H*) hin zur konstanten Magnetfeldstärke (*H*ₖₒₙₛₜ) bewirkt,
indem die Steuerungseinrichtung (5) für das zweite Intervall (*t*₂) einen zweiten Sollstromverlauf (*i*_{Soll,2}) bestimmt, wobei die Steuerungseinrichtung (5) dem zweiten Sollstromverlauf (*i*_{Soll,2}) den konstanten Sollstrom (*i*_{Soll,konst}) zuweist und
indem die Steuerungseinrichtung (5) dem Stromregler (6) im ersten Intervall (*t*₁) den ersten Sollstromverlauf (*i*_{Soll,1}) und im zweiten Intervall (*t*₂) den zweiten Sollstromverlauf (*i*_{Soll,2}) vorgibt.

14. Magnetisch-induktives Durchflussmessgerät (1) nach Anspruch 13, **dadurch gekennzeichnet, dass** der Elektromagnet (3) eine Kommutierungseinrichtung (8) aufweist und die Kommutierungseinrichtung (8) den Spulenstrom (*i*_{S}) kommutiert.

15. Magnetisch-induktives Durchflussmessgerät (1) nach Anspruch 13 oder 14, **dadurch gekennzeichnet, dass** die Steuerungseinrichtung (5) zur Ausführung eines Verfahrens nach einem der Ansprüche 1 bis 12 ausgebildet ist.

## Claims

1. Method for setting a constant magnetic field strength (*Hₖₒₙₛₜ*) of a magnetic field (4) within a commutation interval (Δ*t_{K,1}*) using a magnetic-inductive flowmeter (1) having a measuring tube (2) and an electromagnet (3) for generating the magnetic field (4),
wherein the electromagnet (3) has a current controller (6) and a coil arrangement (7), the current controller (6) generating a coil current (*i_{S}*) and the generated coil current (*i_{S}*) effectuating the magnetic field (4) in the coil arrangement (7),
wherein the current controller (6) has a single controlled current source and a control loop and the current source generates the coil current (*i_{S}*),
wherein the coil current (*i_{S}*) is commutated at the commutation interval (Δ*t_{K,1}*) and
wherein, when a constant setpoint current (*i_{Soll,konst}*) of the current controller (6) is preset, the electromagnet (3) generates the constant magnetic field strength (*Hₖₒₙₛₜ*) in steady state,
**characterized in,**
**that** a first interval (*Δt₁*) having a starting point in time (*t_{1,A}*) and an ending point in time (*t_{1,E}*) and a second interval (Δ*t₂*) having a starting point in time (*t_{2,A}*) and an ending point in time (*t_{2,E}*) are arranged within the commutation interval (Δ*t_{K,1}*),
**that** a first setpoint current curve (*i_{Soll,1}*) is defined for the first interval (Δ*t₁*), wherein the first setpoint current curve (*i_{Soll,1}*) differs by a difference current curve (Δ*i_{Soll}*) from the constant setpoint current (*i_{Soll,konst}*) such that the difference current curve (Δ*i_{Soll}*), with reference to the constant setpoint current (*i*_{*Soll*,*konst*})*,* effectuates a higher rate of change of the magnetic field strength towards the constant magnetic field strength (*Hₖₒₙₛₜ*),
**that** a second setpoint current curve (*i*_{*Soll*,*2*}) is defined for the second interval (*Δt₂*), in that the constant setpoint current (*i*_{*Soll*,*konst*}) is assigned to the second setpoint current curve (*i*_{*Soll*,*2*}), and
**that** the current controller (6) is fed the first setpoint current curve (*i_{Soll,1}*) in the first interval (Δ*t₁*) and the second setpoint current curve (*i_{Soll,2}*) in the second interval (Δ*t₂*)*.*

2. Method according to claim 1, **characterized in that** the first setpoint current curve (*i*_{*Soll*,*1*}) is defined such that the current controller (6) is over-driven by the first setpoint current curve (*i_{Soll,1}*) at a beginning (*t_{1,A}*) of the first interval (Δ*t₁*)*.*

3. Method according to claim 1 or 2, **characterized in that** the first interval (Δ*t₁*) is defined such that it is shorter than a settling time constant of the magnetic field (4).

4. Method according to any one of claims 1 to 3, **characterized in that** the first setpoint current curve (*i_{Soll,1}*) is defined such that it is constant.

5. Method according to any one of claims 1 to 4, **characterized in that** the coil current (*i_{S})* is measured, that a point in time is determined in which the measured coil current (*i_{S}*) has reached the first setpoint current curve (*i*_{*Soll*,*1*}) or the second setpoint current curve (*i*_{*Soll*,*2*}), and that the determined point in time is adopted as the ending point in time (*t_{1,E}*) of the first interval (Δ*t₁*) and as the starting point in time (*t_{2,A}*) of the second interval (Δ*t₂*)*.*

6. Method according to any one of claims 1 to 5, **characterized in that** the first setpoint current curve (*i_{Soll,1}*) is defined such that the magnitude of the difference current curve (Δ*i_{Soll}*) does not exceed 15% of the magnitude of the constant setpoint current (*i*_{*Soll*,*konst*}).

7. Method according to any one of claims 1 to 6, **characterized in that** the magnetic field strength (*H*), or an induction voltage (*u_{I}*) induced in a medium by the magnetic field (4) by a flow of the medium (12) in the measuring tube (2), or the coil current (*i_{S}*), or a coil voltage (*u_{S}*) generated from the coil current (*i_{S}*) in the coil arrangement (7) is measured as an indicator quantity, and that the first interval (Δ*t₁*) and/or the first setpoint current curve (*i*_{*Soll*,*1*}) is/are defined using the indicator quantity.

8. Method according to claim 7, **characterized in that** the indicator quantity is measured in a third interval (Δ*t₃*) within the second interval (Δ*t₂*)*.*

9. Method according to claim 7 or 8, **characterized in that** an evaluation quantity is formed **in that** at least a first measured value and a second measured value of the indicator quantity are measured, a mean value is formed and the mean value is subtracted from the first measured value, and that the first interval (Δ*t₁*) and/or the first setpoint current curve (*i_{Soll,1}*) is/are defined using the evaluation quantity.

10. Method according to claim 9, **characterized in that** that a trend quantity is formed **in that** the evaluation quantity is determined in the second interval (Δ*t₂*) of the commutation interval (Δ*t_{K,1}*) and in the second interval (Δ*t₂*) of at least one further commutation interval (Δ*t_{K,2}*) and the change of the evaluation quantity is determined, and that the first interval (Δ*t₁*) and/or the first setpoint current curve (*i_{Soll,1}*) is/are defined using the trend quantity.

11. Method according to any one of claims 1 to 10, **characterized in that** a temperature at the magnetic-inductive flowmeter (1) is measured and that the measured temperature is used in determining the first interval (Δ*t₁*) and/or the first setpoint current curve (*i*_{*Soll*,*1*})*.*

12. Method according to claim 11, **characterized in that** the temperature of the coil arrangement (7) and/or of the medium (12) is measured.

13. Magnetic-inductive flowmeter (1) having a measuring tube (2), an electromagnet (3) for generating a magnetic field (4) and a control unit (5), wherein the electromagnet (3) has a current controller (6) and a coil arrangement (7), the current controller (6) generating a coil current (*i_{S}*) and the generated coil current (*i_{S}*) effectuating the magnetic field (4) in the coil arrangement (7),
wherein the current controller (6) has a single controlled current source and a control loop and the current source generates the coil current (*i_{S}*),
wherein the electromagnet (3) commutates the coil current (*i_{S}*) at the commutation interval (Δ*t_{k,1}*), and
wherein, when a constant setpoint current (*i_{Soll,konst}*) of the current controller (6) is preset, the electromagnet (3) generates the constant magnetic field strength (*Hₖₒₙₛₜ*) in steady state,
**characterized in,**
**that** the control unit (5) sets the constant magnetic field strength (*Hₖₒₙₛₜ*) of the magnetic field (4) within the commutation interval (Δ*t_{K,1}*),
in that the control unit (5) arranges a first interval (Δ*t₁*) having a starting point in time (*t_{1,A}*) and an ending point in time (*t_{1,E}*) and a second interval (Δ*t₂*) having a starting point in time (*t_{2,A}*) and an ending point in time (*t_{2,E}*) within the commutation interval (Δ*t_{K,1}*),
in that the control unit (5) defines a first setpoint current curve (*i*_{*Soll*,*1*}) for the first interval (Δ*t₁*), wherein the first setpoint current curve (*i_{Soll,1}*) differs by a difference current curve (Δ*i_{Soll}*) from the constant setpoint current (*i_{Soll,konst}*) such that the difference current curve (Δ*i_{Soll}*), with reference to the constant setpoint current (*i_{Soll,konst}*), effectuates a higher rate of change of the magnetic field strength towards the constant magnetic field strength (*Hₖₒₙₛₜ*),
in that the control unit (5) defines a second setpoint current curve (*i*_{*Soll*,*2*}) for the second interval (Δ*t₂*), in that the constant setpoint current (*i_{Soll,konst}*) is assigned to the second setpoint current curve (*i*_{*Soll*,*2*}), and
in that the control unit (5) is fed the first setpoint current curve (*i_{Soll,1}*) in the first interval (Δ*t₁*) and the second setpoint current curve (*i_{Soll,2}*) in the second interval (Δ*t₂*).

14. Magnetic-inductive flowmeter (1) according to claim 13, **characterized in that** the electromagnet (3) has a commutation unit (8) and the commutation unit (8) commutates the coil current (*i_{S}*)*.*

15. Magnetic-inductive flowmeter (1) according to claim 13 or 14, **characterized in that** the control unit (5) is designed for carrying out a method according to any one of claims 1 to 12.

## Revendications

1. Procédé de réglage d'une intensité de champ magnétique constante (Hₖₒₙₛₜ) d'un champ magnétique (4) à l'intérieur d'un intervalle de commutation (t_{K,1}) sur un débitmètre magnéto-inductif (1) comprenant un tube de mesure (2) et un électroaimant (3) destiné à générer le champ magnétique (4),
l'électroaimant (3) possédant un régulateur de courant (6) et un arrangement de bobine (7), le régulateur de courant (6) générant un courant de bobine (i_{S}) et le courant de bobine (i_{S}) généré produisant le champ magnétique (3) dans l'arrangement de bobine (7),
le régulateur de courant (6) possédant une unique source de courant commandée et un circuit de régulation et la source de courant générant le courant de bobine (i_{S}),
le courant de bobine (i_{S}) étant commuté périodiquement à l'intervalle de commutation (t_{K,1}) et
l'électroaimant (3) générant l'intensité de champ magnétique constante (Hₖₒₙₛₜ) en régime transitoire lorsqu'un courant de consigne constant (i_{Soll,konst}) est prédéfini pour le régulateur de courant (6), **caractérisé en ce**
**qu'**un premier intervalle (t₁) ayant un instant de début (t_{1,A}) et un instant de fin (t_{1,E}) ainsi qu'un deuxième intervalle (t₂) ayant un instant de début (t_{2,A}) et un instant de fin (t_{2,E}) sont disposés à l'intérieur de l'intervalle de commutation (t_{K,1}),
**qu'**une première courbe de courant de consigne (i_{Soll,1}) est définie pour le premier intervalle (t₁), la première courbe de courant de consigne (i_{Soll,1}) s'écartant du courant de consigne constant (i_{Soll,konst}) par une courbe de courant différentiel (iₛₒₗₗ) de telle sorte que la courbe de courant différentiel (iₛₒₗₗ) produit un taux de variation de l'intensité du champ magnétique en direction de l'intensité de champ magnétique constante (Hₖₒₙₛₜ) qui est plus élevé qu'avec le courant de consigne constant (i_{Soll,konst}),
**qu'**une deuxième courbe de courant de consigne (i_{Soll,2}) est définie pour le deuxième intervalle (t₂) en attribuant le courant de consigne constant (i_{Soll,konst}) à la deuxième courbe de courant de consigne (i_{Soll,2}) et
**que** la première courbe de courant de consigne (i_{Soll,1}) est prédéfinie pour le régulateur de courant (6) dans le premier intervalle (t₁) et la deuxième courbe de courant de consigne (i_{Soll,2}) dans le deuxième intervalle (t₂) .

2. Procédé selon la revendication 1, **caractérisé en ce que** la première courbe de courant de consigne (i_{Soll,1}) est définie de telle sorte que le régulateur de courant (6) est surmodulé par la première courbe de courant de consigne (i_{Soll,1}) à un début (t_{1,A}) du premier intervalle (t₁).

3. Procédé selon la revendication 1 ou 2, **caractérisé en ce que** le premier intervalle (t₁) est défini de telle sorte qu'il est plus cour que la constante de temps d'établissement du champ magnétique (4) .

4. Procédé selon l'une des revendications 1 à 3, **caractérisé en ce que** la première courbe de courant de consigne (i_{Soll,1}) est définie de telle sorte qu'elle est constante.

5. Procédé selon l'une des revendications 1 à 4, **caractérisé en ce que** le courant de bobine (i_{S}) est mesuré, qu'un instant est défini auquel le courant de bobine (i_{S}) mesuré a atteint la première courbe de courant de consigne (i_{Soll,1}) ou la deuxième courbe de courant de consigne (i_{Soll,2}) et **en ce que** l'instant défini est adopté comme instant de fin (t_{1,E}) du premier intervalle (t₁) et comme instant de début (t_{2,A}) du deuxième intervalle (t₂).

6. Procédé selon l'une des revendications 1 à 5, **caractérisé en ce que** la première courbe de courant de consigne (i_{Soll,1}) est définie de telle sorte que la valeur de la courbe de courant différentiel (i_{Soll}) est égale au maximum à 15 %M de la valeur du courant de consigne constant (i_{Soll,konst}).

7. Procédé selon l'une des revendications 1 à 6, **caractérisé en ce que** l'intensité de champ magnétique (H), ou une tension d'induction (uᵢ) induite par le champ magnétique (4) dans un fluide (12) par un écoulement du fluide (12) dans le tube de mesure (2), ou le courant de bobine (i_{S}), ou une tension de bobine (u_{S}) générée dans l'arrangement de bobine (7) par le courant de bobine (i_{S}) est mesuré en tant que grandeur indicatrice et **en ce que** le premier intervalle (t₁) et/ou la première courbe de courant de consigne (i_{Soll,1}) est ou sont définis en utilisant la grandeur indicatrice.

8. Procédé selon la revendication 7, **caractérisé en ce que** la grandeur indicatrice est mesurée dans un troisième intervalle (t₃) à l'intérieur du deuxième intervalle (t₂).

9. Procédé selon la revendication 7 ou 8, **caractérisé en ce qu'**une grandeur d'évaluation est formée en mesurant au moins une première valeur mesurée et une deuxième valeur mesurée de la grandeur indicatrice, en calculant la valeur moyenne et en soustrayant la valeur moyenne de la première valeur mesurée, et **en ce que** le premier intervalle (t₁) et/ou la première courbe de courant de consigne (i_{Soll,1}) est ou sont définis en utilisant la grandeur d'évaluation.

10. Procédé selon la revendication 9, **caractérisé en ce qu'**une grandeur de tendance est définie en définissant la grandeur d'évaluation dans le deuxième intervalle (t₂) de l'intervalle de commutation (t_{K,1}) et dans le deuxième intervalle (t₂) d'au moins un intervalle de commutation supplémentaire (t_{K,2}) et la modification de la grandeur d'évaluation est définie, et **en ce que** le premier intervalle (t₁) et/ou la première courbe de courant de consigne (i_{Soll,1}) est ou sont définis en utilisant la grandeur de tendance.

11. Procédé selon l'une des revendications 1 à 10, **caractérisé en ce qu'**une température du débitmètre magnéto-inductif (1) est mesurée et **en ce que** la température mesurée est utilisée lors de la définition du premier intervalle (t₁) et/ou de la première courbe de courant de consigne (i_{Soll,1}).

12. Procédé selon la revendication 11, **caractérisé en ce que** la température de l'arrangement de bobine (7) et/ou du fluide (12) est mesurée.

13. Débitmètre magnéto-inductif (1) comprenant un tube de mesure (2) et un électroaimant (3) destiné à générer un champ magnétique (4) et un dispositif de commande (5),
l'électroaimant (3) possédant un régulateur de courant (6) et un arrangement de bobine (7), le régulateur de courant (6) générant un courant de bobine (i_{S}) et le courant de bobine (i_{S}) généré produisant le champ magnétique (3) dans l'arrangement de bobine (7),
le régulateur de courant (6) possédant une unique source de courant commandée et un circuit de régulation et la source de courant générant le courant de bobine (i_{S}),
l'électroaimant (3) commutant le courant de bobine (i_{S}) périodiquement à un intervalle de commutation (t_{K,1}) et l'électroaimant (3), en régime transitoire, générant une intensité de champ magnétique constante (Hₖₒₙₛₜ) du champ magnétique (4) lorsque le dispositif de commande (5) du régulateur de courant prédéfinit un courant de consigne constant (i_{Soll,konst},
**caractérisé en ce**
**que** le dispositif de commande (5) règle l'intensité de champ magnétique constante (Hₖₒₙₛₜ) du champ magnétique (4) à l'intérieur de l'intervalle de commutation (t_{K,1}), en ce que le dispositif de commande (5) dispose à l'intérieur de l'intervalle de commutation (t_{K,1}) un premier intervalle (t₁) ayant un instant de début (t_{1,A}) et un instant de fin (t_{1,E}) ainsi qu'un deuxième intervalle (t₂) ayant un instant de début (t_{2,A}) et un instant de fin (t_{2,E}),
en ce que le dispositif de commande (5) définit une première courbe de courant de consigne (i_{Soll,1}) pour le premier intervalle (t₁), la première courbe de courant de consigne (i_{Soll,1}) s'écartant du courant de consigne constant (i_{Soll,konst}) par une courbe de courant différentiel (i_{Soll}) de telle sorte que la courbe de courant différentiel (i_{Soll}) produit un taux de variation de l'intensité du champ magnétique (H) en direction de l'intensité de champ magnétique constante (Hₖₒₙₛₜ) qui est plus élevé qu'avec le courant de consigne constant (i_{Soll,konst}),
en ce que le dispositif de commande (5) définit une deuxième courbe de courant de consigne (i_{Soll,2}) pour le deuxième intervalle (t₂), le dispositif de commande (5) attribuant le courant de consigne constant (i_{Soll,konst}) à la deuxième courbe de courant de consigne (i_{Soll,2}) et
en ce que le dispositif de commande (5) prédéfinit la première courbe de courant de consigne (i_{Soll,1}) pour le régulateur de courant (6) dans le premier intervalle (t₁) et la deuxième courbe de courant de consigne (i_{Soll,2}) dans le deuxième intervalle (t₂) .

14. Débitmètre magnéto-inductif (1) selon la revendication 13, **caractérisé en ce que** l'électroaimant (3) possède un dispositif de commutation (8) et le dispositif de commutation (8) commute le courant de bobine (iₛ) .

15. Débitmètre magnéto-inductif (1) selon la revendication 13 ou 14, **caractérisé en ce que** le dispositif de commande (5) est configuré pour mettre en oeuvre un procédé selon l'une des revendications 1 à 12.
